# EUROPEAN PATENT SPECIFICATION

(11) **EP 4 260 941 B1**
(45) Date of publication and mention of the grant of the patent: **28.01.2026**
(21) Application number: 22168131.5
(22) Date of filing: 13.04.2022
(51) Int. Cl.: B02C 2/00, B02C 13/282, B02C 17/22, B65G 11/16

(54) **WEAR PROTECTION COMPONENT WITH LOCAL STRESS RELIEF AREAS**
VERSCHLEISSSCHUTZKOMPONENTE MIT LOKALEN ENTLASTUNGSBEREICHEN
COMPOSANT DE PROTECTION CONTRE L'USURE AVEC DES ZONES DE DÉTENTE LOCALES

(43) Date of publication of application: 18.10.2023
(73) Proprietor: Metso Finland Oy, 02230 Espoo (FI)
(72) Inventor: TÖRMÄ, Timo Juhani, 33820 Tampere (FI)
(74) Representative: Hoffmann Eitle

(56) References cited:
- WO-A1-2021/163761
- GB-A- 2 109 303
- US-A- 3 533 570
- US-A1- 2019 118 185

## Description

### Field of the invention

The present invention relates to wear protection components for use in various applications e.g. in the mining industry, and to corresponding methods of manufacturing. One possible field of application of the wear protection components are crushers such as gyratory crushers and cone crushers to which the invention also relates.

Crushers such as cone crushers and gyratory crushers are rock crushing systems, which generally break apart rock, stone, ore or other material in a crushing gap between a stationary part of the crusher frame and a moving crushing head. The crushing head gyrates about a vertical axis within a stationary shell which is part of a frame of the crusher. To impart the gyratory motion to the crushing head, the crushing head is e.g. assembled surrounding an eccentric that rotates about a fixed shaft. The eccentric can be driven by a pinion and countershaft assembly.

The gyratory motion of the crushing head with respect to the stationary shell crushes rock, stone or other material as it travels through the crushing gap. The crushed material exits the crusher through the bottom of the crusher.

Due to the material passing the crusher and being crushed in the crushing gap, certain structural elements within such crushers, including e.g. the inner wall of a bottom shell of the frame of the crusher below the actual crushing chamber, are subject to extensive wear.

Similar wear phenomena occur in various other applications in the mining industry and beyond. Examples include grinding mills, conveyor systems, and truck beds to name but a few.

### Prior Art

In conventional equipment such as mining equipment, structural elements which are subject to wear are made from steel or clad with steel. If they are worn to a certain extent, the wear parts are exchanged, or the steel lining is replaced.

From WO 2017/174147 A1 a protective liner for a crusher is known wherein the protective liner is releasably fitted within the crusher. The protective liner comprises an elastic material layer and wear resistant inserts retained by the elastic material layer.

Further ceramic-rubber composites have been known in the art, e.g. from US 3,607,606 which discloses a composite of rubber, natural or synthetic, and alumina-based ceramic, useful as a wear-resistant lining for ball mills, conveyors, chutes and the like. The composite comprises a layer of rubber having embedded in and bonded to the surface thereof closely spaced shaped bodies of alumina-base ceramic.

WO-A1-2006/132582 also relates to wear-resistant lining elements intended for a surface subjected to wear and which has an outwardly directed surface, over which material in the form of pieces or particles, such as crushed ore and crushed rock material, is intended to move. Chutes and truck platforms are mentioned as examples. The wear-resistant lining element comprises elastomeric material mainly adapted to absorb impact energy and wear-resistant members mainly adapted to resist wear. These are preferably made from ceramics material.

According to WO-A1-2008/087247, similar composite materials are used in wear parts of a vertical shaft impactor, e.g. distributor plates.

US 3,533,570 relates to a grinding plate lining for tube- or ball-mills, which comprises a mill jacket and elastic intermediate layers disposed between the mill jacket and the grinding plates. Each of the grinding plates is spaced apart by a slit from the adjacent grinding plates, and glue means are provided for securing the grinding plates to the intermediate layers and the latter to the mill jacket over their entire engaging faces.

According to GB 2 109 303 A, a wear-resistant rubber 1 has a perforate metal sheet 3 embedded therein (typically with an aperture ratio of 15-75% and circular perforations arranged in a hexagonal pattern) parallel to and adjacent one face 2 thereof so that rubber intercommunicates at perforations 4 with the thicker and thinner layers to either side.

WO 2021/163761 A1 relates to an impact wear panel comprising an elastomeric panel body, and a plate insert positioned within the panel body, the plate insert comprising at least an impact plate having an upper side and an underside, wherein the impact plate is positioned at a non-zero height within the panel body and is entirely enclosed therein. Also provided is a method of constructing an impact wear panel.

A crusher according to US 2019/0118185 A1 comprises at least one protective liner which is releasably fitted within the crusher so as to protect a structural element of the crusher which is subject to wear due to its contact with material passing the crushing gap, at least a part of an outwardly directed surface of the protective liner constituting a wear surface. The at least one protective liner comprises an elastic material layer and wear resistant inserts retained by the elastic material layer, wherein outwardly directed surfaces of the wear resistant inserts form part of the wear surface of the protective liner.

A commercial solution known under the trademark Trellex Poly-Cer includes a wear plate ("Poly-Cer" plate) made from a polymer material and wear resistant inserts, combined with a steel reinforcement plate. This liner is produced by vulcanizing the polymer material with the ceramic inserts and the steel plate to obtain a flat liner sheet. There is an option to bend certain Poly-Cer products into a required shape and curvature: the steel back plate gives the opportunity to bend the liner to an application related radius of curvature.

### Summary of the invention

It is the object underlying the present invention to increase the durability of a wear protection component.

This object is achieved by means of a wear protection component, a manufacturing method, and a crusher as recited in the independent claims.

The claimed wear protection component comprises a layer of elastic material and a reinforcing support. The elastic material is bonded to the reinforcing support, and the wear protection component is bent into a curved shape. In an area delimited by an outer periphery of the reinforcing support, the wear protection component according to the invention comprises one or more local stress relief areas in which the elastic material is not bonded to the reinforcing support.

The invention is based on the finding that under certain circumstances, the post-bending of such components - i.e. the bending after vulcanizing the elastic material to the reinforcing support - creates strain-stresses in the elastic material. To reduce such strain-stresses and thereby improve the durability of the component, the invention provides local stress relief areas by creating a non-continuous bond between the elastic material and the reinforcing support. The stress relief areas reduce internal structural strain-stresses by allowing the elastic material to move to an extent relative to the reinforcing support, thereby easing the stress factor locally inside the wear component.

The elastic material may be vulcanized to the reinforcing support.

The one or more local stress relief areas may include areas where the elastic material is inhibited from bonding, e.g. vulcanizing, to the reinforcing support.

In embodiments, the one or more local stress relief areas include one or more through openings formed in the reinforcing support. These may be a series of openings in a pattern or array. In the areas of the openings, the elastic material is not bonded to the reinforcing support. The number and size of the openings is determined by application based factors including the overall thickness of the component.

Seeing as the most significant stresses to be relieved by the local stress relief areas occur at the straight edges of the component, the number and/or the size of the local stress relief areas may be increased towards a straight edge of the component.

The reinforcing support may be a steel sheet or plate bent into the curved shape.

The elastic material can be a polymer material, particularly an elastomer material, such as rubber, isoprene, polybutadiene, butadiene, nitrile, ethylene, propylene, chloroprene or silicone rubber, or a mixture thereof, including filling or auxiliary materials and impurities max. 30 % by volume.

The layer of elastic material may further comprise wear resistant inserts made from e.g. ceramics retained by the elastic material, wherein outwardly directed surfaces of the wear resistant inserts form part of a wear surface of the wear protection component.

In such embodiments, the aforementioned stresses in the elastic material, particularly towards the edges, results in the wear resistant inserts being less elastically supported and therefore prone to cracking upon impacts. Reducing the stresses in the elastic material therefore advantageously improves the shock absorbing ability of the wear resistant inserts.

The inserts can be metallic or ceramic inserts or made from a ceramic metallic ("cermet") composite. If metallic, they can be of an iron based metal, including metallic carbides or oxides in a proportion of 10-40 % by volume. If ceramic, they can consist of carbides or oxides of metallic elements, such as aluminum, titanium, tantalum, wolfram, chromium or zirconium or of mixtures thereof. If cermet, they can include carbides or oxides of metallic elements, such as aluminum, titanium, tantalum, wolfram, chromium or zirconium or a mixture thereof and of a metallic binder, said binder being of a plain metal or a metal alloy and having cobalt, nickel or iron as the main component of the binder.

The wear-resistant inserts can be arranged in rows in the outwardly directed surface of the elastic material layer. Every second wear-resistant member can be offset relative to the neighboring wear-resistant members in the same row.

The mutual proportions of the elastic material and the wear-resistant inserts depend on the wear conditions and the location and manner of attachment of the protective liner within the crusher. According to one embodiment, the wear-resistant inserts can be arranged and distributed about the elastic material layer so that the outwardly directed surface of at least one area of the protective liner mainly consists of the wear-resistant members.

The wear resistant inserts can be attached to the elastic material by vulcanizing, e.g. by vulcanizing ceramic inserts into a polymer based material. Alternatively or in addition, the wear resistant inserts can be retained within the elastic material mechanically by means of a press fit and/or a form fit.

In general terms, the combination between wear-resistant, e.g. ceramics elements and an elastic, e.g. rubber layer is advantageous insofar as ceramics are mainly adapted to compensate for sliding or abrasive wear, whereas rubber is mainly adapted for compensating impact wear. The protective liner of the present invention thereby provides for a longer wear life than conventional steel liners. The reduction of wear will also reduce the downtimes which are needed for replacing worn parts.

In the field of wear protection components, a specific elastic material comprising such embedded ceramic inserts is known under the trademark Trellex Poly-Cer. In this type of material, high quality ceramics feature high wear resistance, and elastic rubber absorbs shock loads effectively. Advantages of this type of material in comparison with traditional material are:
- high quality ceramics is more resistant to abrasion,
- rubber absorbs shock loads and reduces noise.
- less weight, easy in operation.

In the wear protection component, the reinforcing support can have the same or substantially the same size as the layer of elastic material, or can be dimensioned and sized so as to support only a partial region of the layer of elastic material, i.e. at least one peripheral region of the layer of elastic material can extend beyond the outer periphery of the reinforcing support.

The invention also provides a method of manufacturing a wear protection component. The method includes the steps of providing a reinforcing support, bonding an elastic material layer to the reinforcing support to obtain a wear protection component, and bending the wear protection component into a curved shape. In an area delimited by an outer periphery of the reinforcing support, one or more local stress relief areas are formed in the wear protection component in which the elastic material is not bonded to the reinforcing support.

Thanks to the local stress relief areas, the component may be post-bent (i.e. bent after bonding the elastic material layer to the reinforcing support) without causing excessive stress strain in the elastic material layer.

In the claimed method, bonding the elastic material to the reinforcing support may comprise vulcanizing the elastic material to the reinforcing support.

Forming the one or more local stress relief areas may include locally inhibiting the bonding, e.g. by vulcanization, of the elastic material to the reinforcing support.

Forming the one or more local stress relief areas may also include forming one or more through holes in the reinforcing support, prior to or after bonding the elastic material layer to the reinforcing support and prior to or after forming the bent portion.

In embodiments, a polymer-ceramic liner is manufactured as a flat sheet having a wear surface containing ceramic inserts, e.g. in a symmetrical matrix form, and comprising a reinforcing steel plate at the opposite side. After bonding the polymer-ceramic layer to the steel plate by vulcanization, the sheet is post-bent to an application related radius of curvature. Local stress relief area are provided as local holes in the steel plate creating a non-continuous attachment surface of the elastic material to the steel plate.

The invention also provides a rock crusher comprising a frame and a crushing head, wherein the crusher further comprises one or more wear protection components as described further above.

The rock crusher of the invention can for example be a gyratory crusher or a cone crusher.

The wear protection components can be provided to specific locations within the crusher. They can be designed to protect the frame, a drive shaft or countershaft, and/or an arm or traverse of the crusher. The wear protection components can be installed e.g. by welding or using bolts or in any other manner known per se.

Going beyond the actual crusher, wear protection components according to the invention could also be used on a feed chute to the crusher, or on a bottom conveyor feed where the material ends up after crushing.

Wear protection components according to the invention may find many other applications in the mining industry and beyond. Grinding mills, conveyor systems, and truck beds are mentioned as exemplary applications.

### Brief description of the drawings

The above, as well as additional objects, features and advantages of the present invention will be better understood through the following illustrative and non-limiting detailed description of preferred embodiments of the present invention, with reference to the appended drawing, where the same reference numerals will be used for similar elements, wherein:
Figure 1 is a schematic partial perspective view of a cone crusher equipped with wear protection components according to the present invention.
Figure 2a is a perspective front view of a liner sheet prior to bending.
Figure 2b is a perspective rear view of the liner sheet prior to bending.
Figure 3a is a perspective front view of the liner sheet after bending into the shape of a protective liner.
Figure 3b is a perspective rear view of the liner sheet after bending into the shape of a protective liner.
Figures 4a-d are schematic illustrations to explain the behaviour of the elastic material layer of a wear protection component of the invention upon bending.
Figure 5a is a perspective front view of another liner sheet prior to bending.
Figure 5b is a perspective rear view of the liner sheet prior to bending.
Figure 6a is a perspective front view of the liner sheet after bending into the shape of a protective liner.
Figure 6b is a perspective rear view of the liner sheet after bending into the shape of a protective liner.
Figures 7a and 7b are perspective front and rear views of still another protective liner.
Figures 8a and 8b are perspective front and rear views of a countershaft box guard for a crusher.
Figures 9a and 9b are perspective front and rear views of an arm guard for a crusher.

### Description of embodiments of the invention

Embodiments of the present invention will now be described in detail with reference to the drawings.

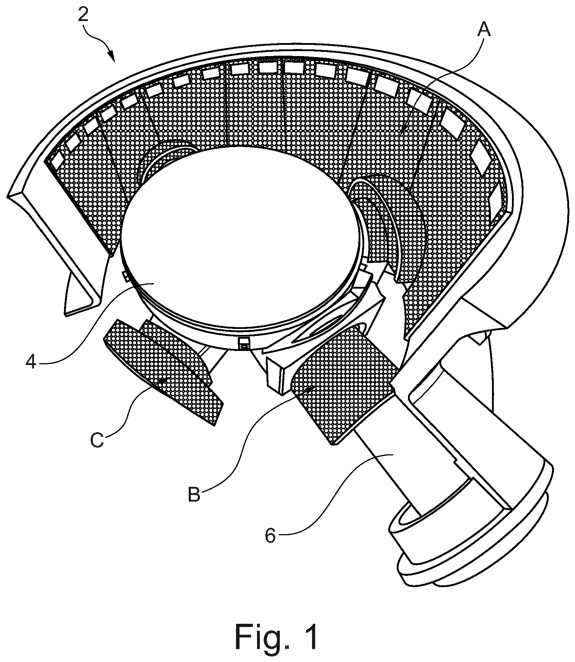

Fig. 1 is a schematic partial perspective view of a cone crusher. The crusher comprises a frame comprising a bottom shell 2. A crushing head is mounted upon a vertically extending main shaft (both not illustrated). At its lower end, the main shaft is mounted within a central hub 4. At its upper end, the main shaft is coupled with the crushing head.

The mode of operation of a cone crusher is known and will therefore not be described in detail here. Material to be crushed is fed via the top of the crusher and is crushed in a crushing gap between an outer surface of the crushing head and an inner surface of a surrounding mantle. The crushed material is discharged from the bottom of the crusher. Exemplary crushers known in the field are the Nordberg HP and MP cone crushers including the MP1000 and MP800.

During operation, the crushing head performs a gyratory motion. A drive shaft or countershaft 6 is arranged to impart the gyratory motion to the crusher head. The countershaft 6 is surrounded by a countershaft housing, also known as countershaft box. The countershaft box surrounds the drive shaft 6, at least from above, in the area where the drive shaft 6 is exposed to material which has passed the crushing gap. The countershaft box terminates in a first collar adjacent to the central hub 4, which is visible in the Figure, and a second collar adjacent to the frame which is not illustrated here.

In accordance with the invention, the cone crusher partially illustrated in Figure 1 is equipped with wear protection components in the form of protective liners and guards to protect surfaces within the crusher which are subject to wear due to their contact with the material being processed in the crusher. Specifically, in this embodiment, the wear protection components are designed to protect the frame, the drive shaft and the traverses or arms of the crusher:
Wear protection components according to the invention are provided, on the one hand, along the inner circumferential surface of the bottom shell 2. Such protective liners, indicated at "A" in Figure 1, are provided in the form of concave plates or segments arranged adjacent to each other along the inner circumference of the crusher's shell 2. Depending on the type and size of the crusher, one row or several rows of liners A can be provided.

A wear protection component according to the invention is also provided to the countershaft box as part of a countershaft box guard "B".

Further wear protection components according to the invention form part of arm guards "C" of the crusher.

Each of the protective liners and guards includes an elastic material layer which has wear-resistant inserts embedded at least in a surface area thereof which forms a wear surface. Each wear resistant insert has an outwardly directed surface forming part of the wear surface of the protective liner or guard. The remainder of each wear resistant insert is immersed in the elastic material layer. As explained further above, the elastic material layer can be a polymer layer, and the wear-resistant parts can be ceramic inserts. One possible implementation would be a layer made from a composite polymer-ceramics material. Therefore, the wear surface of the protective liner will also be referred to as a "polymer-ceramics layer" in the following.

In accordance with the present invention, the individual wear protection components comprise local stress relief areas to reduce internal strain-stresses in the elastic material layer and thereby improve on the durability of the components. This will now be explained in detail with reference to the remaining Figures.

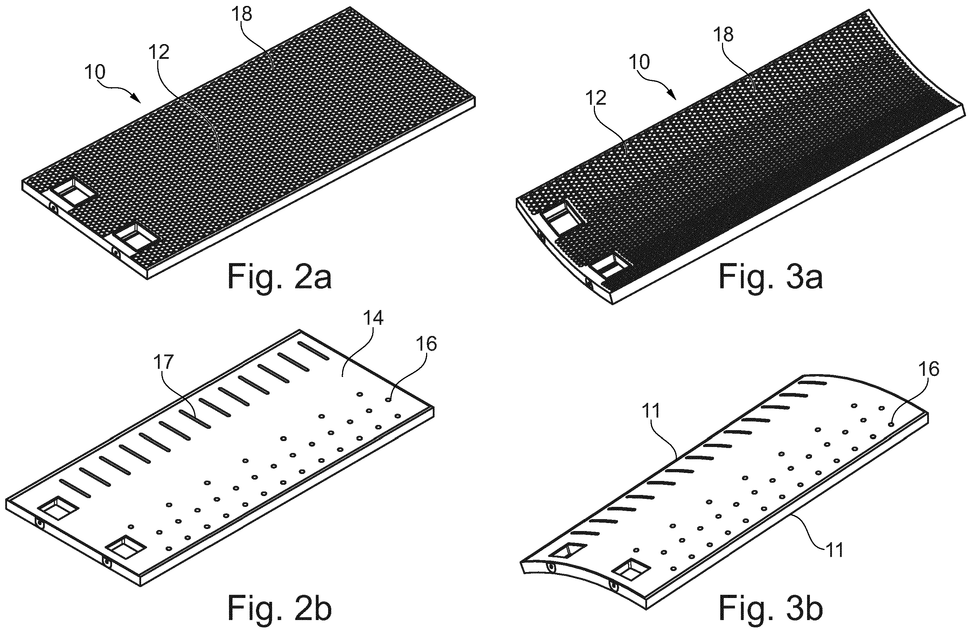

Figures 2a and 2b are perspective front and rear views respectively of a liner sheet used for making a protective liner generally of the type described above and shown at 10 in Figure 1. From the initial plane shape shown in Figures 2a and 2b, the liner sheet is brought into a curved shape adapted to the curvature of the structure in the crusher to which the resulting protective liner is to be fixed, e.g. inside a bottom shell 2 thereof as illustrated in Figure 1. Figures 3a and 3b are perspective front and rear views of the liner 10 after bending the sheet into the required shape. A row or array of such liners 10 would be replaceably mounted to the crusher in a manner known per se.

Also in a manner known per se, the liner 10 comprises a layer of elastic material 12 providing a wear surface and a steel plate 14 as a reinforcing support. The elastic material 12 is vulcanized onto the steel plate 14. In the embodiment illustrated here, the steel plate 14 has substantially the same size as the layer of elastic material 12 and therefore supports and reinforces the layer of elastic material 12 as a whole. The elastic material 12 also extends about the circumferential edges of the steel plate 14.

Ceramic inserts 18 are embedded into the layer of elastic material 12 at the side thereof providing the wear surface: Each wear resistant insert 18 has an outwardly directed surface forming part of the wear surface of the protective liner 10. The remainder of each insert 18 is immersed in the elastic (e.g. rubber) material. In the mounted state of the component, this side constitutes the wear surface facing towards the inside of the crusher so as to be exposed to the material passing the crusher. On its side opposite the ceramic inserts 18, the layer of elastic material 12 is bonded to the supporting steel plate 14.

To provide the local stress relief areas to the liner 10 in an area delimited by an outer periphery of the steel plate 14, the steel plate 14 is provided with a pattern of through openings. In this embodiment, the steel plate 14 exemplarily comprises round through holes 16 along one straight longitudinal edge 11 of the liner 10 and in an area inward therefrom, and slit-shaped through holes 17 along the other straight longitudinal edge 11 of the liner 10. The round through holes 16 are distributed so that the number of holes is larger along the edge 11 than in an area further towards the center of the plate. In other words, the number of holes 16 is increased towards the edge 11, in a direction following the curvature. A longitudinally extending central area of the plate is in this embodiment free of any through holes.

The through openings may have any shape such as polygonal, square, triangular, circle, oval, rectangular or a combination thereof.

Instead of or in addition to providing through holes to the steel plate 14, local stress relief areas can also be created in other ways such as by locally inhibiting the vulcanization of the elastic material to the steel plate.

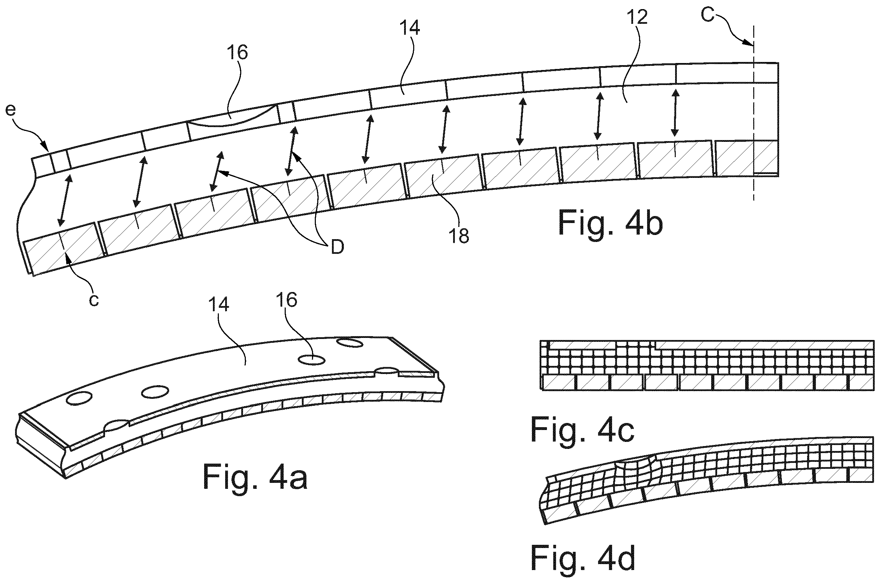

The behaviour of the layer of elastic material 12 and the reinforcing support plate 14 of a wear protection component upon post-bending, i.e. bending after bonding the elastic material 12 to the steel plate 14, can best be understood with reference to Figures 4a-d.

Figure 4a is a schematic cut-away view of a wear protection component such as the protective liner of Figures 2a-3b after vulcanizing and bending. The steel plate 14 of the component is provided with through holes 16 creating local stress relief areas. The component is shown here so as to be cut in a plane perpendicular to the thickness thereof wherein the cutting plane cuts through two of the through holes.

Bending process causes an exponentially growing strain-stress field in the polymer material of the component. The steel plate and ceramic insert matrix have different behavioural qualities and a dislocation phenomenon occurs between a ceramic insert center location and an equivalent location of the insert on the steel plate. The strain-stresses in the polymer material decreases the durability of the polymer-ceramic liner: the strain-stress field decreases the ceramic inserts' shock absorbing ability. Bending effects cause a rotational effect on the individual single insert towards natural state flat sheet form. Rotational behaviour increase the strain-stress effect dramatically between inserts on the matrix and in the thin polymer bond between them. Rotational behaviour is decreasing due to the effects of the strain-stress relieving mechanism restoring the lost ability to absorb shocks.

In Figure 4b which is an enlarged partial view of Figure 4a, arrows D have been added to illustrate the dislocation strain inside the polymer material 12. The thicker the arrow line, the larger the dislocation strain. The dislocation strain results in the ceramic inserts being less elastically supported and therefore prone to cracking upon impacts. Also designated are the centerlines c of the ceramic inserts 18 and the respective equivalent locations e on the steel plate 14.

It becomes apparent from Figure 4b that the strain is reduced in the areas of the through holes 16. The reason for this is that in these areas, the elastic material is not bonded to the steel plate and is therefore allowed to move to a certain extent relative to the steel plate. During the bending, the surface of the polymer material in the area of the local hole 16 stretches inwards forming a cup shaped form. This cupping effect is the consequence from the strain and stress relieving factor inside the polymer material.

Figures 4c and 4d illustrate the same phenomenon again using a grid to indicate the deformation of the elastic material layer.

What is also apparent from Figures 4a-d is that the stresses in the elastic material layer occur particularly towards the edges of the component whereas no stresses occur in the central area of the component around the center line C where no forces act onto the elastic material to dislocate it relative to the steel plate. In general terms, it can therefore be said that local stress relief areas are not necessary in the central area of the component, whereas the size and/or number of the local stress relief areas - through holes in this case - is preferably increased towards the edges of the steel plate.

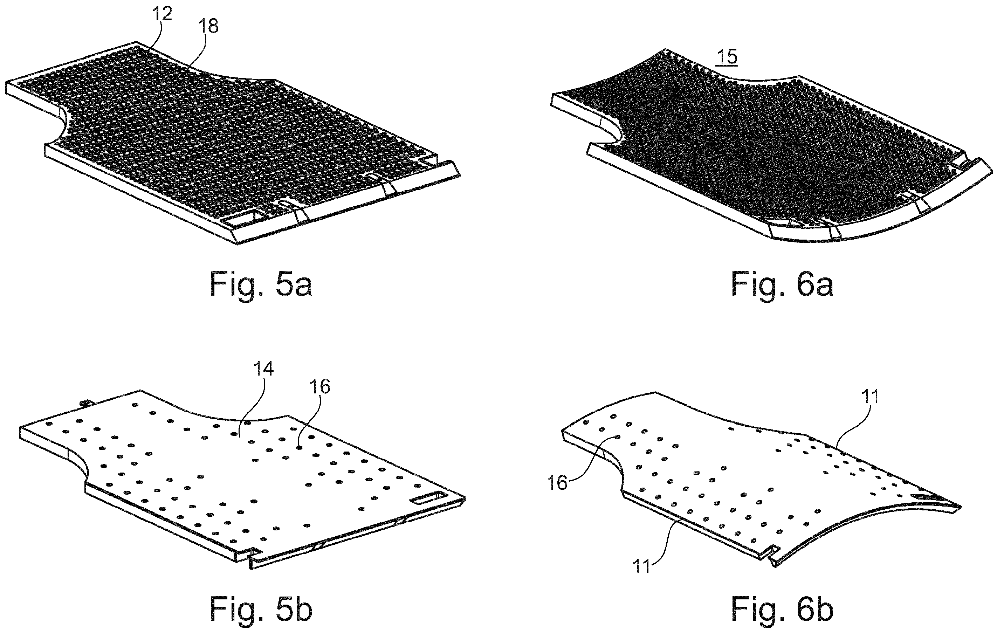

Figures 5a-6b show a protective liner also configured for use in a crusher shell. Figures 5a and 5b are perspective front and rear views of a liner sheet after vulcanization but prior to bending. Figures 6a and 6b are perspective front and rear views of the protective liner after bending. Similar to the shell liner in Figures 3a-3b, the liner in Figures 6a-6b has a rubber layer with ceramic inserts vulcanized to a steel plate, wherein the steel plate 14 in this case has cut-outs 15 to adapt to the specific area of installation. The stress relief features in an area delimited by an outer periphery of the steel plate 14 are here provided exemplarily as round through holes 16 in the steel plate 14 which in this embodiment are distributed so that the number of holes 16 is larger along the edges 11 than in an area further towards the center of the plate. A longitudinally extending central area of the plate is again free of any through holes.

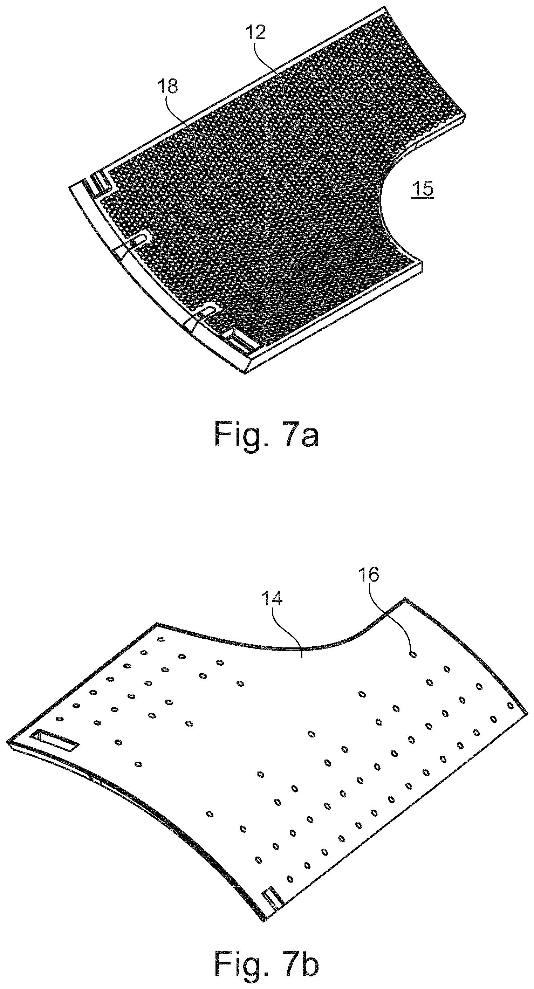

Figures 7a and 7b are perspective front and rear views of still another protective liner again having a slightly different shape with one cut-out 15 to adapt to the envisaged installation site.

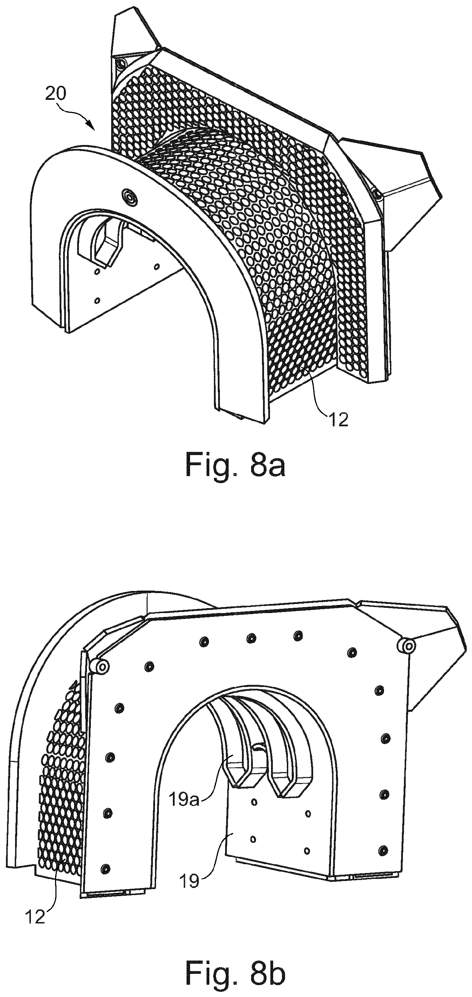

Figures 8a and 8b are perspective front and rear views of a countershaft box guard 20 for covering a countershaft box of a crusher from above in an area near the central hub 4 (see "B" in Figure 1). The countershaft box guard 20 protects the countershaft box from being damaged by falling crushed material.

The guard 20 includes an archway-shaped section which, according to the invention, includes a Poly-Cer layer 12 on a steel support and is provided with local stress relief areas, in this case again in the form of through holes in the steel support. Note that the steel support plate as such is not visible here because the guard 20 is in turn mounted to a carrier structure 19. Brackets 19a are provided as fixation elements on an inward facing surface of the carrier structure 19, forming recesses which are adapted to become seated on matching protrusions, particularly protruding studs, provided on the countershaft box of the crusher.

Note that in this archway-shaped section the combined Poly-Cer layer 12 and steel support are bent so that the Poly-Cer layer 12 assumes a convex shape and the steel support assumes a concave shape, which is contrary to the liners 10 described above in which the Poly-Cer layer 12 becomes concavely curved and the steel support becomes convexly curved. Also in this alternatively curved configuration, the through holes or other local stress relief areas act to reduce internal stresses in the elastic material layer 12 much in the same manner as in the aforementioned embodiments though.

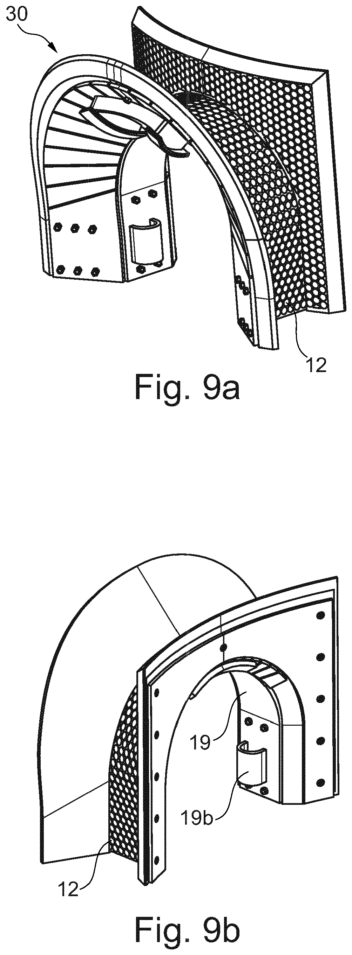

Figures 9a and 9b are perspective front and rear views of an arm guard 30 for covering an arm of a crusher from above in an area near the central hub 4 (see "C" in Figure 1 for the location of an arm guard). The arm guard 30 protects the arm from being damaged by falling crushed material.

Similar as the countershaft box guard 20 just described, the arm guard 30 includes an archway-shaped section which, according to the invention, includes a Poly-Cer layer 12 on a steel support plate and is provided with local stress relief areas, e.g. again in the form of through holes in the steel support. The arm guard 30 is in turn mounted to a carrier structure 19, and fixation elements, here in the form of brackets 19b, are provided on an inward facing surface of the carrier structure 19.

Similarly as in the case of the countershaft guard, in the archway-shaped section the combined Poly-Cer layer 12 and steel support are bent so that the Poly-Cer layer 12 assumes a convex shape and the steel support plate assumes a concave shape.

## Claims

1. A wear protection component comprising
- a layer of elastic material (12) and
- a reinforcing support (14),
wherein the elastic material (12) is bonded to the reinforcing support (14), and
wherein the wear protection component is bent into a curved shape,
**characterized in that**
in an area delimited by an outer periphery of the reinforcing support (14), the wear protection component comprises one or more local stress relief areas (16, 17) in which the elastic material (12) is not bonded to the reinforcing support (14).

2. The wear protection component of claim 1, wherein the elastic material (12) is vulcanized to the reinforcing support (14).

3. The wear protection component of claim 1 or 2, wherein the one or more local stress relief areas (16, 17) include means for preventing the elastic material from bonding to the reinforcing support (14).

4. The wear protection component of any one of claims 1-3, wherein the one or more local stress relief areas include one or more through holes (16, 17) formed in the reinforcing support (14).

5. The wear protection component of any one of the preceding claims wherein the number and/or the size of the local stress relief areas (16, 17) is increased towards a straight edge (11) of the wear protection component (10).

6. The wear protection component of any one of the preceding claims wherein the reinforcing support (14) is a steel sheet or plate bent into the curved shape.

7. The wear protection component of any one of the preceding claims in which the elastic material (12) is a polymer or rubber.

8. The wear protection component of claim 1, wherein the layer of elastic material (12) further comprises wear resistant inserts (18) made from e.g. ceramics retained by the elastic material (12), wherein outwardly directed surfaces of the wear resistant inserts (18) form part of a wear surface of the wear protection component.

9. The wear protection component of any one of the preceding claims in which at least one peripheral region of the layer of elastic material (12) extends beyond the outer periphery of the reinforcing support (14).

10. A method of manufacturing a wear protection component, the method including the steps of
- providing a reinforcing support (14),
- bonding a layer of elastic material (12) to the reinforcing support (14) to obtain a wear protection component, and
- bending the wear protection component into a curved shape,
**characterized in that**
- in an area delimited by an outer periphery of the reinforcing support (14), one or more local stress relief areas (16, 17) are formed in the wear protection component in which the elastic material (12) is not bonded to the reinforcing support (14).

11. The method of claim 10 in which bonding the elastic material (12) to the reinforcing support (14) comprises vulcanizing the elastic material (12) to the reinforcing support (14).

12. The method of claim 10 or 11 in which forming the one or more local stress relief areas (16, 17) includes locally inhibiting the bonding of the elastic material (12) to the reinforcing support (14).

13. The method of any one of claims 10-12 in which forming the one or more local stress relief areas includes forming one or more through holes (16, 17) in the reinforcing support (14), prior to or after bonding the elastic material (12) to the reinforcing support (14) and prior to or after forming the bent portion.

14. A rock crusher comprising a frame and a crushing head, wherein the crusher further comprises a wear protection component according to any one of claims 1-9.

15. The rock crusher of claim 14, wherein the wear protection component of the crusher constitutes or forms part of
- at least one protective liner (10) which is releasably fitted within the crusher, at least a part of an outwardly directed surface of the protective liner (10) constituting a wear surface, or
- a countershaft box guard (20) of the crusher, or
- an armguard (30) of the crusher.

## Patentansprüche

1. Verschleißschutzkomponente, umfassend
- eine Schicht aus elastischem Material (12) und
- einen Verstärkungsträger (14),
wobei das elastische Material (12) mit dem Verstärkungsträger (14) verbunden ist, und
wobei die Verschleißschutzkomponente in eine gekrümmte Form gebogen ist,
**dadurch gekennzeichnet, dass**
in einem Bereich, der durch einen äußeren Umfang des Verstärkungsträgers (14) begrenzt ist, umfasst die Verschleißschutzkomponente einen oder mehrere lokale Entlastungsbereiche (16, 17), in denen das elastische Material (12) nicht mit dem Verstärkungsträger (14) verbunden ist.

2. Verschleißschutzkomponente nach Anspruch 1, wobei das elastische Material (12) mit dem Verstärkungsträger (14) vulkanisiert ist.

3. Verschleißschutzkomponente nach Anspruch 1 oder 2, wobei der eine oder die mehreren lokalen Entlastungsbereiche (16, 17) Mittel zum Verhindern einer Verbindung des elastischen Materials mit der Verstärkungsstütze (14) einschließen.

4. Verschleißschutzkomponente nach einem der Ansprüche 1-3, wobei der eine oder die mehreren lokalen Entlastungsbereiche ein oder mehrere Durchgangslöcher (16, 17) einschließen, die im Verstärkungsträger (14) ausgebildet sind.

5. Verschleißschutzkomponente nach einem der vorstehenden Ansprüche, wobei die Anzahl und/oder die Größe der lokalen Entlastungsbereiche (16, 17) in Richtung auf eine gerade Kante (11) der Verschleißschutzkomponente (10) zunimmt.

6. Verschleißschutzkomponente nach einem der vorstehenden Ansprüche, wobei der Verstärkungsträger (14) ein in die gekrümmte Form gebogenes Stahlblech oder eine Stahlplatte ist.

7. Verschleißschutzkomponente nach einem der vorstehenden Ansprüche, wobei das elastische Material (12) ein Polymer oder Gummi ist.

8. Verschleißschutzkomponente nach Anspruch 1, wobei die Schicht aus elastischem Material (12) weiter verschleißfeste Einsätze (18), die z. B. aus Keramik hergestellt sind und durch das elastische Material (12) gehalten werden, umfasst, wobei die nach außen gerichteten Oberflächen der verschleißfesten Einsätze (18) Teil einer Verschleißoberfläche der Verschleißschutzkomponente bilden.

9. Verschleißschutzkomponente nach einem der vorstehenden Ansprüche, wobei sich mindestens ein Umfangsbereich der Schicht aus elastischem Material (12) über den äußeren Umfang des Verstärkungsträgers (14) hinaus erstreckt.

10. Herstellungsverfahren einer Verschleißschutzkomponente, wobei das Verfahren die folgenden Schritte einschließt:
- Bereitstellen eines Verstärkungsträgers (14),
- Verbinden einer Schicht aus elastischem Material (12) mit dem Verstärkungsträger (14), um eine Verschleißschutzkomponente zu erhalten, und
- Biegen der Verschleißschutzkomponente in eine gekrümmte Form,
**dadurch gekennzeichnet, dass**
- in einem durch den äußeren Umfang des Verstärkungsträgers (14) begrenzten Bereich ein oder mehrere lokale Entlastungsbereiche (16, 17) in der Verschleißschutzkomponente ausgebildet sind, in denen das elastische Material (12) nicht mit dem Verstärkungsträger (14) verbunden ist.

11. Verfahren nach Anspruch 10, wobei das Verbinden des elastischen Materials (12) mit dem Verstärkungsträger (14) das Vulkanisieren des elastischen Materials (12) mit dem Verstärkungsträger (14) umfasst.

12. Verfahren nach Anspruch 10 oder 11, wobei das Bilden des einen oder der mehreren lokalen Entlastungsbereiche (16, 17) das lokale Verhindern des Verbindens des elastischen Materials (12) mit dem Verstärkungsträger (14) einschließt.

13. Verfahren nach einem der Ansprüche 10-12, wobei das Bilden des einen oder der mehreren lokalen Entlastungsbereiche das Bilden eines oder mehrerer Durchgangslöcher (16, 17) im Verstärkungsträger (14) einschließt, vor oder nach dem Verbinden des elastischen Materials (12) mit dem Verstärkungsträger (14) und vor oder nach dem Bilden des gebogenen Abschnitts.

14. Brecher für Gestein, umfassend einen Rahmen und einen Brechkopf, wobei der Brecher für Gestein weiter eine Verschleißschutzkomponente nach einem der Ansprüche 1-9 umfasst.

15. Brecher für Gestein nach Anspruch 14, wobei die Verschleißschutzkomponente des Brechers bildet oder einen Teil bildet von
- mindestens eine Schutzauskleidung (10), die lösbar im Brecher befestigt ist, wobei mindestens ein Teil einer nach außen gerichteten Oberfläche der Schutzauskleidung (10) eine Verschleißoberfläche bildet, oder
- eine Vorgelegewellenkastenabdeckung (20) des Brechers, oder
- ein Armschutz (30) des Brechers.

## Revendications

1. Composant de protection contre l'usure comprenant :
- une couche de matériau (12) élastique et
- un support (14) de renfort,
dans lequel le matériau (12) élastique est lié au support (14) de renfort, et
dans lequel le composant de protection contre l'usure est plié selon une forme incurvée,
**caractérisé en ce que**
dans une zone délimitée par une périphérie externe du support (14) de renfort, le composant de protection contre l'usure comprend une ou plusieurs zones (16, 17) de soulagement local des contraintes dans lesquelles le matériau (12) élastique n'est pas lié au support (14) de renfort.

2. Composant de protection contre l'usure selon la revendication 1, dans lequel le matériau (12) élastique est vulcanisé sur le support (14) de renfort.

3. Composant de protection contre l'usure selon la revendication 1 ou la revendication 2, dans lequel les une ou plusieurs zones (16, 17) de soulagement local des contraintes incluent des moyens destinés à empêcher le matériau élastique de se lier au support (14) de renfort.

4. Composant de protection contre l'usure selon l'une quelconque des revendications 1 à 3, dans lequel les une ou plusieurs zones de soulagement local des contraintes incluent un ou plusieurs trous (16, 17) traversants formés dans le support (14) de renfort.

5. Composant de protection contre l'usure selon l'une quelconque des revendications précédentes, dans lequel le nombre et/ou la taille des zones (16, 17) de soulagement local des contraintes augmentent vers un bord (11) droit du composant (10) de protection contre l'usure.

6. Composant de protection contre l'usure selon l'une quelconque des revendications précédentes, dans lequel le support (14) de renfort est une tôle ou une plaque d'acier pliée selon une forme incurvée.

7. Composant de protection contre l'usure selon l'une quelconque des revendications précédentes, dans lequel le matériau (12) élastique est un polymère ou un caoutchouc.

8. Composant de protection contre l'usure selon la revendication 1, dans lequel la couche de matériau (12) élastique comprend en outre des inserts (18) résistants à l'usure réalisées, par exemple, en céramique retenues par le matériau (12) élastique, dans lequel des surfaces, dirigées vers l'extérieur, des inserts (18) résistants à l'usure font partie d'une surface d'usure du composant de protection contre l'usure.

9. Composant de protection contre l'usure selon l'une quelconque des revendications précédentes, dans lequel au moins une région périphérique de la couche de matériau (12) élastique s'étend au-delà de la périphérie externe du support (14) de renfort.

10. Procédé de fabrication d'un composant de protection contre l'usure, le procédé incluant les étapes de
- fourniture d'un support (14) de renfort,
- adhésion d'une couche de matériau (12) élastique au support (14) de renfort pour obtenir un composant de protection contre l'usure, et
- pliage du composant de protection contre l'usure selon une forme incurvée,
**caractérisé en ce que**
- dans une zone délimitée par une périphérie externe du support (14) de renfort, une ou plusieurs zones (16, 17) de soulagement local des contraintes sont formées dans le composant de protection contre l'usure dans lequel le matériau (12) élastique n'est pas lié au support (14) de renfort.

11. Procédé selon la revendication 10 dans lequel la liaison du matériau (12) élastique au support (14) de renfort comprend la vulcanisation du matériau (12) élastique au support (14) de renfort.

12. Procédé selon la revendication 10 ou la revendication 11, dans lequel la formation des une ou plusieurs zones (16, 17) de soulagement local des contraintes inclut l'inhibition locale de la liaison du matériau (12) élastique au support (14) de renfort.

13. Procédé selon l'une quelconque des revendications 10 à 12, dans lequel la formation des une ou plusieurs zones de soulagement local des contraintes inclut la formation d'un ou plusieurs trous (16, 17) traversants dans le support (14) de renfort, avant ou après la liaison du matériau (12) élastique au support (14) de renfort et avant ou après la formation de la section pliée.

14. Concasseur de roches comprenant une armature et une tête de concassage, dans lequel le concasseur comprend en outre un composant de protection contre l'usure selon l'une quelconque des revendications 1 à 9.

15. Concasseur de roches selon la revendication 14, dans lequel le composant de protection contre l'usure du concasseur constitue ou fait partie
- d'au moins une couche (10) protectrice qui est ajustée de manière amovible au sein du concasseur, au moins une partie d'une surface dirigée vers l'extérieur de la couche (10) protectrice constituant une surface d'usure, ou
- d'un garde-boîte (20) d'arbre de renvoi du concasseur, ou
- d'un protège-bras (30) du concasseur.
